# EUROPEAN PATENT APPLICATION

(11) **EP 3 748 606 A1**
(43) Date of publication of application: **09.12.2020**
(21) Application number: 19747457.0
(22) Date of filing: 24.01.2019
(51) Int. Cl.: G08G 1/16, G01C 21/26, G01C 21/30, G01S 17/93

(54) **ROAD SURFACE INFORMATION ACQUISITION METHOD**

(30) Priority: 31.01.2018 JP 2018015142
(71) Applicant: Pioneer Corporation, Tokyo 113-0021 (JP)
(72) Inventor: OYAMA, Kazuki, Kawagoe-shi, Saitama 350-8555 (JP); MATSUMOTO, Reiji, Kawagoe-shi, Saitama 350-8555 (JP); AMANO, Katsumi, Kawagoe-shi, Saitama 350-8555 (JP); AOKI, Takashi, Kawagoe-shi, Saitama 350-8555 (JP); TAKAHASHI, Tetsuya, Kawagoe-shi, Saitama 350-8555 (JP); NAMBATA, Ippei, Kawagoe-shi, Saitama 350-8555 (JP)
(74) Representative: Grünecker Patent- und Rechtsanwälte PartG mbB
(86) International application number: PCT/JP2019/002289
(87) International publication number: WO 2019/151110

(57) **Abstract**

A road surface information acquisition method that improves accuracy of estimation of a location of a mobile object in a traveling direction, is provided. A first onboard device (2) mounted on a measuring vehicle (5) includes a LiDAR (23B), and it receives a reflected wave which is laser emitted to and reflected by a road surface and recognizes a curve start location of a lane line on the road surface based on reflected wave intensity. The first onboard device (2) transmits road surface information including the recognized curve start location to a server device (3) via a network (N). Based on the road surface information, the server device (3) gives information indicating the curve start location to information regarding the lane line in map information. A second onboard device mounted on a vehicle (6) acquires the information regarding the lane line from the server device (3) and estimates a current location by comparing a curve start location of the lane line recognized by a LiDAR (41B) and the information indicating the curve start location of the lane line acquired from the server device (3).

## Description

### Technical Field

This invention relates to a road surface information acquisition method.

### Background Art

An autonomous driving vehicle requires highly accurate estimation of a current location by matching a location of a feature measured by a sensor such as a LiDAR (Light Detection and Ranging) sensor and a location of the feature in map information for autonomous driving. Patent Document 1 describes one exemplary method for estimating a current location using a location of a feature as a landmark detected using LiDAR and the feature in map information.

Also, Patent Document 2 describes detecting a white line using LiDAR and detecting with high accuracy a relative location in a transverse direction of the white line with respect to a vehicle, or a direction in which the vehicle is heading with respect to the white line.

### Prior Art Document

### Patent Document

Patent Document 1: JP 2017-72422 A
Patent Document 2: JP 2017-215199 A

### Summary of the Invention

### Technical Problem

There is a room for improvement in the detection method described in Patent Document 2, since the detection of a lane line such as the white line using a sensor such as the LiDAR sensor to estimate a current location of the vehicle requires accurate detection of the lane line such as the white line.

Therefore, one example of an object of the present invention is to address the above-mentioned problem. That is, an object of the present invention is, for example, to provide a road surface information acquisition method that provides improved accuracy of detection (recognition) of a lane line.

### Solution to Problem

In order to solve the problem mentioned above, a road surface information acquisition method according to claim 1 includes transmitting an electromagnetic wave to a road surface and receiving a reflected wave, and recognizing a curve start location of a lane line formed on the road surface based on a change in a reflectivity of the electromagnetic wave in a predetermined direction.

A road surface information acquisition device according to claim 5 includes a transmitter capable of transmitting an electromagnetic wave to a road surface, a receiver capable of receiving the electromagnetic wave reflected by the road surface, and a recognition unit configured to recognize a curve start location of a lane line formed on the road surface based on a change in a reflection intensity, in a predetermined direction, of the electromagnetic wave received by the receiver.

A road surface information acquisition device according to claim 6 includes an acquisition unit configured to acquire information from a sensor unit, the sensor unit including a transmitter capable of transmitting an electromagnetic wave to a road surface and a receiver capable of receiving the electromagnetic wave reflected by the road surface, and a recognition unit configured to recognize a curve start location of a lane line formed on the road surface based on the information acquired by the acquisition unit.

A road surface information acquisition program according to claim 7 allows a computer to transmit an electromagnetic wave to a road surface and receive a reflected wave, and function as a recognition unit configured to recognize a curve start location of a lane line formed on the road surface based on a change in a reflectivity of the electromagnetic wave in a predetermined direction.

A storage medium according to claim 8 stores the road surface information acquisition program according to claim 7.

Further, a road surface information acquisition device according to claim 9 includes an acquisition unit configured to acquire an image of a road surface photographed by a photographing unit, and a recognition unit configured to recognize a curve start location of a lane line formed on the road surface based on brightness information of the acquired image.

### Brief Description of the Drawings

FIG. 1 is a block diagram showing one embodiment of a drive assistance system for performing a road surface information acquisition method, a map information creation method and a current location estimation method;
FIG. 2 is a functional configuration diagram of a first onboard device shown in FIG. 1;
FIG. 3 is a functional configuration diagram of a server device shown in FIG. 1;
FIG. 4 is an illustrative diagram illustrating map information prior to recording of an end of a lane line;
FIG. 5 is an illustrative diagram illustrating map information after the end of the lane line is recorded;
FIG. 6 is a functional configuration diagram of a second onboard device shown in FIG. 1;
FIG. 7 is a flowchart showing a procedure of a road surface information acquiring process to be performed by the first onboard device shown in FIG. 1;
FIG. 8 is a graph showing intensity distributions obtained when reflection areas are scanned from the lane line along a traveling direction;
FIG. 9 is a flowchart showing a procedure of a drive assisting process to be performed by the second onboard device shown in FIG. 1; and
FIG. 10 is a functional configuration diagram of a first onboard device according to another embodiment.

### Description of Embodiments

A road surface information acquisition method according to one embodiment of the present invention will be described below. The road surface information acquisition method according to one embodiment of the present invention includes transmitting an electromagnetic wave to a road surface and receiving a reflected wave, and recognizing a curve start location of a lane line formed on the road surface based on a change in a reflectivity of the electromagnetic wave in a predetermined direction. Consequently, the curve start location of the lane line can be recognized with high accuracy. Further, since this recognized curve start location of the lane line can be used as a landmark to estimate a current location, accuracy of estimation of a location of a mobile object in a traveling direction can be improved.

The predetermined direction may be a direction along a traveling direction of a mobile object located before the curve start location. Consequently, the curve start location can be recognized with high accuracy.

The curve start location may be recognized based on intensity distributions of the reflected waves in reflection areas set along the predetermined direction. Consequently, the curve start location can be recognized with high accuracy.

A location where number of peaks in the intensity distribution of the reflected wave changes from one to two may be recognized as the curve start location. Consequently, the curve start location can be recognized with high accuracy.

Further, a road surface information acquisition device according to one embodiment of the present invention includes a transmitter capable of transmitting an electromagnetic wave to a road surface, a receiver capable of receiving the electromagnetic wave reflected by the road surface, and a recognition unit configured to recognize a curve start location of a lane line formed on the road surface based on a change in a reflection intensity, in a predetermined direction, of the electromagnetic wave received by the receiver. Consequently, the curve start location of the lane line can be recognized with high accuracy. Further, since this recognized curve start location of the lane line can be used as a landmark to estimate a current location, accuracy of estimation of a location of a mobile object in a traveling direction can be improved.

Further, a road surface information acquisition device according to one embodiment of the present invention includes an acquisition unit configured to acquire information from a sensor unit, the sensor unit including a transmitter capable of transmitting an electromagnetic wave to a road surface and a receiver capable of receiving the electromagnetic wave reflected by the road surface, and a recognition unit configured to recognize a curve start location of a lane line formed on the road surface based on the information acquired by the acquisition unit. Consequently, the curve start location of the lane line can be recognized with high accuracy. Further, since this recognized curve start location of the lane line can be used as a landmark to estimate a current location, accuracy of estimation of a location of a mobile object in a traveling direction can be improved.

Further, the above-described road surface information acquisition method may be a lane line information creating program which is executed by a computer. Since the program is executed by the computer, a dedicated hardware and such is not required, and it may be installed to a general-purpose information processing device to function.

Further, the above-mentioned information processing program may be stored in a computer readable storage medium. Consequently, the program can be distributed alone other than by incorporating it into a device, and also, version update and such can be implemented easily.

Further, a road surface information acquisition device according to one embodiment of the present invention includes an acquisition unit configured to acquire an image of a road surface photographed by a photographing unit, and a recognition unit configured to recognize a curve start location of a lane line formed on the road surface based on brightness information of the acquired image. Consequently, the curve start location of the lane line can be recognized with high accuracy. Further, since this recognized curve start location of the lane line can be used as a landmark to estimate a current location, accuracy of estimation of a location of a mobile object in a traveling direction can be improved.

### EXAMPLE

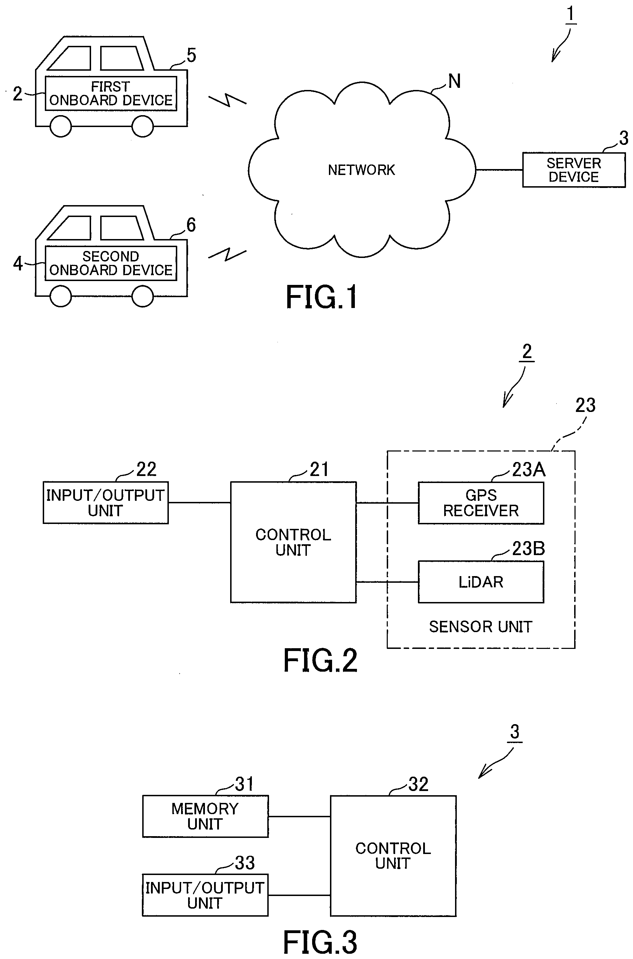

In the following, a road surface information acquisition method of the present invention will be explained with reference to FIG. 1 through FIG. 6.

A drive assistance system 1 includes a first onboard device 2 as a road surface information acquisition device, a server device 3 as an external device and a second onboard device 4. The first onboard device 2 is a device configured to acquire road surface information and transmit it to the server device 3, and is, for example, configured to be mounted on a measuring vehicle 5 for the purpose of creating map information. The measuring vehicle 5 is a mobile object that travels on a road. The server device 3 acquires the road surface information from the first onboard device 2 and creates map information. For example, the server device 3 is capable of communicating with the first onboard device 2 via a network N such as Internet, and it uses the network N to acquire the road surface information from the first onboard device 2. It is noted that the acquisition of the road surface information by the server device 3 is not limited to the fashion described above, and, for example, an operator and such may manually transfer the road surface information from the first onboard device 2 to the server device 3 without using the network N. In the following explanation, transferring of information between the server device 3 and the first and second onboard devices 2 and 4 is performed by transmitting and receiving information via the network N; however, the present invention is not limited to this fashion, and transferring of information may be performed manually by an operator.

The second onboard device 4 is capable of communicating with the server device 3 via the network N. The second onboard device 4 is a device configured to receive map information from the server device 3 to perform drive assistance and, is configured to be mounted on a vehicle 6, for example. The vehicle 6 is a mobile object which receives the drive assistance. In this example, the first and second onboard devices 2, 4 configured to be mounted on the vehicles 5, 6 are described as examples of a terminal capable of communicating with the server device 3; however, such terminal may be a mobile terminal that can be installed on the mobile object such as a smartphone. It is noted that reception of map information by the second onboard device 4 is not limited to the above-described fashion, and, for example, an operator and such may manually transfer map information from the server device 3 to the second onboard device 4 without using the network N.

A functional configuration of the first onboard device 2 is shown in FIG. 2. The first onboard device 2 includes a control unit 21, an input/output unit 22 and a sensor unit 23.

A processor such as a CPU (Central Processing Unit) of the first onboard device 2 functions as the control unit 21, and the control unit 21 performs overall control of the first onboard device 2. The control unit 21 uses a later-described LiDAR 23B to recognize a curve start location of a lane line and transmits the curve start location to the server device 3 as road surface information. The control unit 21 may acquire surrounding information other than the road surface information and may transmit it to the server device 3. Herein, the lane line is a white line or a yellow line or the like formed on a road surface.

A network interface and such of the first onboard device 2 functions as the input/output unit 22, and the input/output unit 22 transmits the road surface information.

The sensor unit 23 includes a GPS (Global Positioning System) receiver 23A and the LiDAR 23B and such. In this example, the sensor unit 23 includes the LiDAR 23B as one example of a sensor capable of transmitting an electromagnetic wave. In addition, the LiDAR 23B serves as a transmitter and a receiver. The GPS receiver 23A detects current location information of the measuring vehicle 5. As is well-known, the GPS receiver 23A periodically receives electric waves transmitted from a plurality of GPS satellites, obtains current location information and a current time, and outputs them to the control unit 21.

The LiDAR 23B outputs a pulsed laser while changing an output direction within a predetermined detection region, receives a reflected wave of this laser and generates point cloud information. The LiDAR 23B outputs a plurality of laser pulses in the detection region and generates point cloud information based on the reflected wave of this plurality of laser pulses. Respective information constituting the point cloud information is information indicative of an output direction of the laser, a distance to an object by which the laser is reflected, and intensity of the reflected wave. In this example, the LiDAR 23B emits the laser towards the road surface, so the road surface is the detection region. Thus, the point cloud information is information indicative of a distance to the road surface as an object. The LiDAR 23B may be configured to emit the laser toward an object other than the road surface and acquire surrounding information other than the road surface information.

The server device 3 is installed at an office and such that provides map information.

A functional configuration of the server device 3 is shown in FIG. 3. The server device 3 includes a memory unit 31, a control unit 32 and an input/output unit 33.

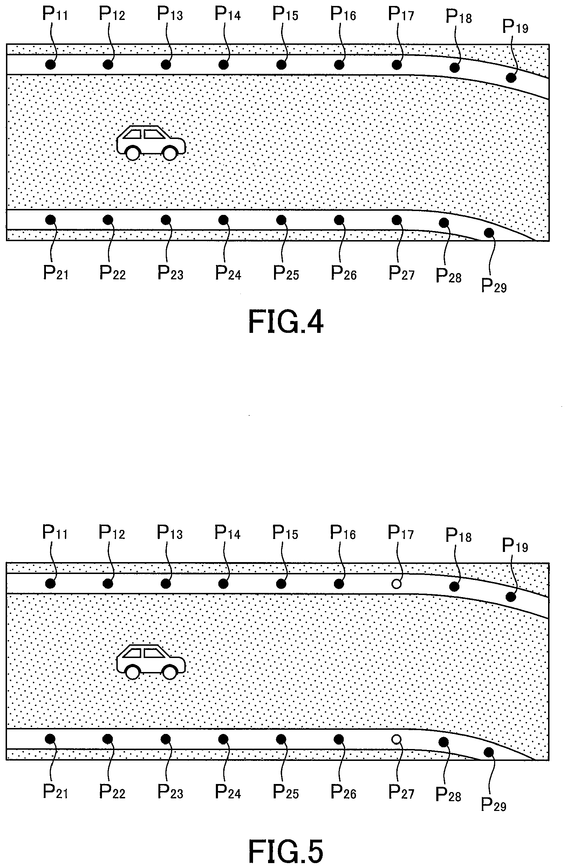

A memory device such as a hard disk of the server device 3 functions as the memory unit 31, in which the map information is stored. In this example, the map information already includes information regarding the lane line. As shown in FIG. 4, the information regarding the lane line is constituted of point information P11, ..., P29 indicative of the lane lines. Further, location information (latitude, longitude) is given to each of the point information P11, ..., P29.

A processor such as a CPU of the server device 3 functions as the control unit 32, and the control unit 32 performs overall control of the server device 3. Based on the road surface information such as the curve start location of the lane line transmitted from the first onboard device 2, the control unit 32 for example gives information indicative of the curve start location of the lane line to the point information that is recognized as being the curve start location (indicated with a white circle in FIG. 5) out of the point information P11, ..., P29, as shown in FIG. 5. By giving the information indicative of the curve start location described above to the information regarding the lane line included in the map information, the onboard device that has received this map information can recognize the curve start location of the lane line from the information regarding the lane line.

A network interface and such of the server device 3 functions as the input/output unit 33, and the input/output unit 33 receives the road surface information from the first onboard device 2 and transmits the map information to the second onboard device 4.

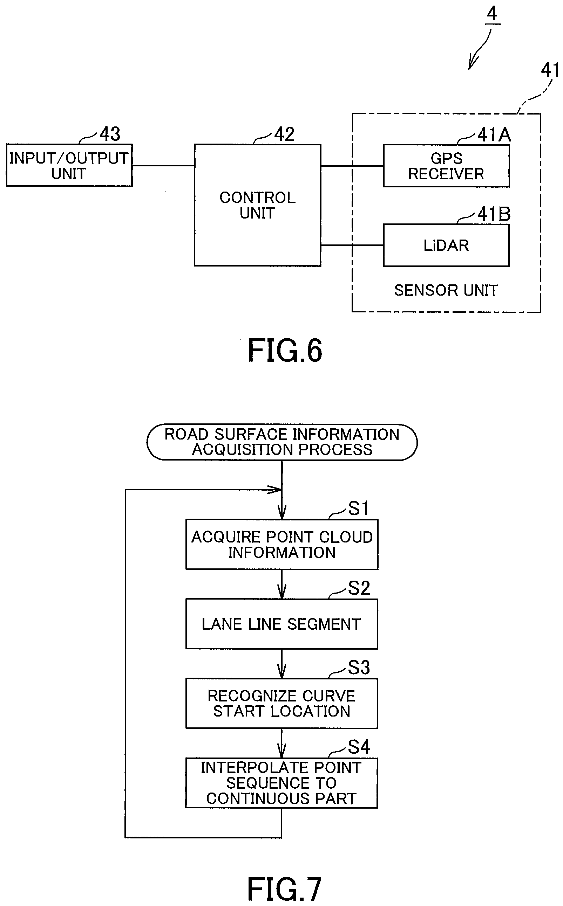

A functional configuration of the second onboard device 4 is shown in FIG. 6. The second onboard device 4 includes a sensor unit 41, a control unit 42 and an input/output unit 43.

The sensor unit 41 includes a GPS receiver 41A and a LiDAR 41B and such. The GPS receiver 41A and the LiDAR 41B are devices having the same function as the above-described GPS receiver 23A and the LiDAR 23B of the first onboard device 2, respectively, thus a detailed explanation thereof is omitted.

A processor such as a CPU of the second onboard device 4 functions as the control unit 42, and the control unit 42 performs overall control of the second onboard device 4. The control unit 42 uses the information acquired from the sensor unit 41 and the map information acquired from the server device 3 to perform the drive assistance. Herein, the drive assistance means presentation of information related to control of a steering wheel, an accelerator, a brake and such and/or information related to driving. For simplicity, the following explanation is described with reference to autonomous driving control that is performed as the drive assistance. The control unit 42 is required to estimate a current location of own vehicle to perform the autonomous driving control. In this example, the control unit 42 estimates a current location based on the curve start location of the lane line that has been recognized using the LiDAR 41B and the information indicative of the curve start location of the lane line that is included in the map information acquired from the server device 3.

A network interface and such of the second onboard device 4 functions as the input/output unit 43, and the input/output unit 43 receives the map information.

Next, an operation of the drive assistance system 1 of this example will be explained. Firstly, a road surface information acquiring process to be executed by the control unit 21 of the first onboard device 2 (hereinafter, just referred to as the first onboard device 2) will be explained with reference to FIG. 7. The flowchart shown in FIG. 7 is arranged as a computer program, thereby providing a road surface information acquisition program with which the first onboard device 2 causes a computer to execute the road surface acquisition method.

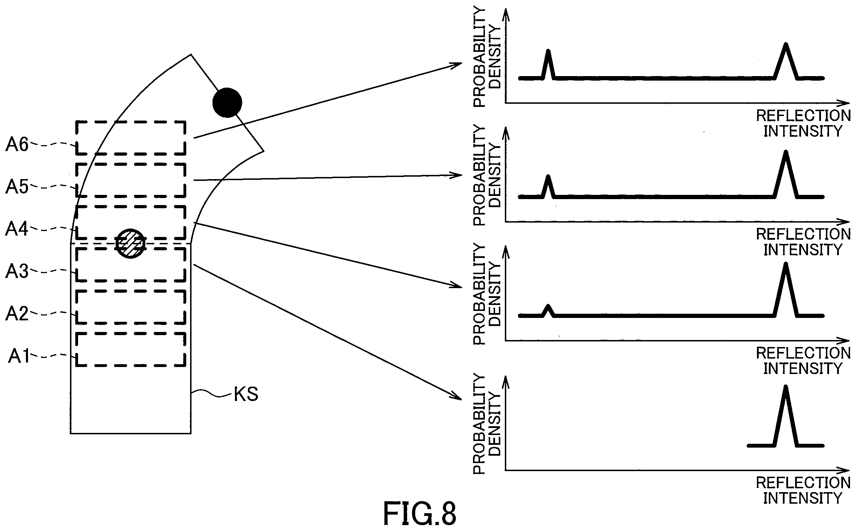

The first onboard device 2 executes the road surface information acquiring process during traveling. In the road surface information acquiring process, the first onboard device 2 controls the LiDAR 23B and acquires the above-described point cloud information related to the road surface during traveling (step S1). Then, the first onboard device 2 extracts a lane line segment based on the point cloud information. Specifically, the first onboard device 2 generates an orthoimage of the point cloud based on the acquired point cloud information. Then, image processing is performed on this orthoimage to detect the line segment (straight line, curved line) and such, for example. Then, the detected segments (straight line, curved line) are paired, and the lane line segment that forms a contour of one lane line is extracted (step S2). In FIG. 8, one example of the lane line segment is indicated by a reference sign KS. Then, the first onboard device 2 recognizes the curve start location of the lane line formed on the traveling road surface from the point cloud information as shown in FIG. 8 (step S3), and after that the process returns to step S1.

Next, the recognition of the curve start location in step S3 will be explained with reference to FIG. 8. The lane line shown in FIG. 8 is curved along the traveling direction of the measuring vehicle 5. In other words, this lane line includes a straight portion and a curved portion (bent portion). The first onboard device 2 recognizes the curve start location based on the intensity distributions of the reflected waves reflected in reflection areas A1-A6. A reflectivity of the laser for the road surface on which the lane line is formed is high, while a reflectivity of the laser for the road surface on which the lane line is not formed is low. Accordingly, the LiDAR 23B receives the reflected wave having higher intensity from the road surface on which the lane line is formed compared to the road surface on which the lane line is not formed. Thus, the first onboard device 2 estimates the location of the lane line from the reflection intensity of the laser (i.e., the intensity of the reflected wave received by the LiDAR 23B), and sets the first reflection area A1 so as to be located on the lane line. Subsequently, the first onboard device 2 sets the reflection areas A2-A6 along the traveling direction of the measuring vehicle 5. Herein, the reflection areas A1-A6 are areas to be scanned along the traveling direction of the measuring vehicle 5 (predetermined direction).

As shown in FIG. 8, when the scan range of the reflection area is within the straight portion of the lane line, the laser emitted to the reflection areas A1-A3 will be reflected by the lane line with a high reflectivity, thus the intensity distribution within the reflection areas A1-A3 continues to have a peak at one point where the reflection intensity is high. When the scan range of the reflection area is switched from the straight portion to the curved portion of the lane line, then, for the laser emitted to the reflection areas A4-A6 located on the traveling direction side with respect to the curve start location, a percentage that the laser is reflected by the road surface on which the lane line is not formed increases as separating from the curve start location. That is, as separating from the curve start location, the reflectivity of the road surface with respect to the electromagnetic wave decreases, and the intensity of the reflected wave received by the LiDAR 23B decreases.

Consequently, the intensity distribution within the reflection areas A4-A6 will have peaks at two points, namely a point where the reflection intensity is high and a point where the reflection intensity is low. Further, as separating from the curve start location, the peak at the point where the reflection intensity is low becomes greater while the peak at the point where the reflection intensity is high becomes smaller. Accordingly, the first onboard device 2 recognizes a location at which the number of peaks in the intensity distribution of the reflection areas A1-A6 changes from one to two, as the curve start location. The location where the number of peaks changes from one to two is a location where a peak level at the point where the reflection intensity is high and a peak level at the point where the reflection intensity is low are in a predetermined magnitude relationship.

The first onboard device 2 transmits to the server device 3 road surface information including the curve start location that was recognized at a predetermined timing.

Next, a map information creating process performed by the control unit 32 of the server device 3 (hereinafter just referred to as the server device 3) will be explained with reference to FIG. 5. Upon reception of the road surface information including the curve start location, the server device 3 gives the information indicative of the curve start location to the information regarding the lane line shown in FIG. 4. Specifically, as shown in FIG. 5, if the point corresponding to the received curve start location is included in the points P11-P19, P21-P29 stored as the information regarding the lane line, then the server device 3 gives the information indicative of the curve start location to that point. In the example shown in FIG. 5, the information indicative of the curve start location is given to the points P17 and P27.

On the other hand, if the points stored as the information regarding the lane line do not include the point corresponding to the received curve start location, then the server device 3 adds the point corresponding the curve start location to the information regarding the lane line and further gives the information indicative of the curve start location to that point.

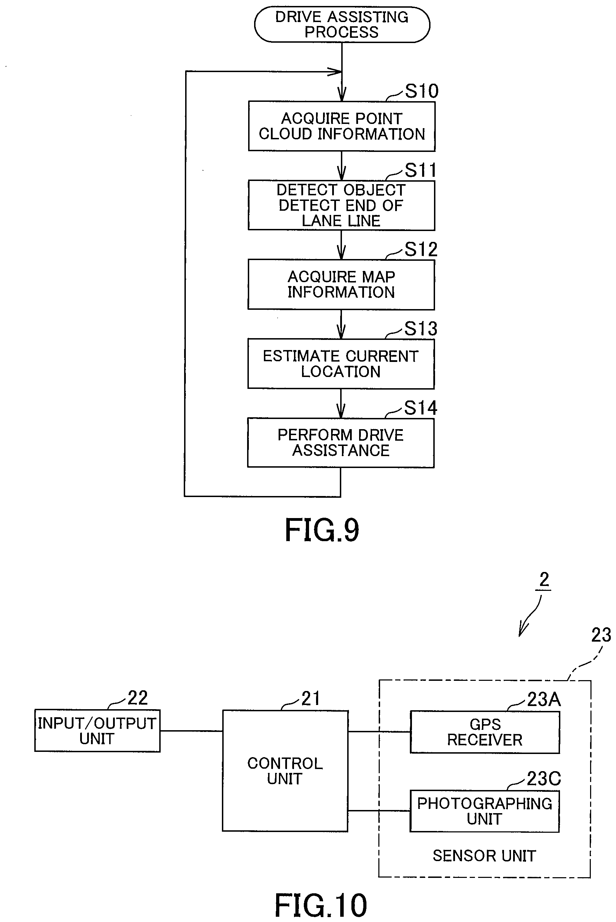

Next, a drive assisting process performed by the second onboard device 4 will be explained with reference to a flowchart shown in FIG. 9. Firstly, the second onboard device 4 acquires the point cloud information from the LiDAR 41B (step S10). Next, the second onboard device 4 performs object detection from the point cloud information and performs detection of the curve start location of the lane line based on the point cloud information from the LiDAR 41B (step S11).

Specifically, the second onboard device 4 executes a so-called object recognizing process based on the point cloud information, thereby detects an object and recognizes kind of that object (e.g., whether the object is a building, a walking person or another vehicle). Consequently, the kind of the object around the vehicle and a distance to that object can be recognized. Further, the second onboard device 4 detects the curve start location of the lane line using the similar determination method as the first onboard device 2 and recognizes a distance to the curve start location.

Next, the second onboard device 4 communicates with the server device 3 and acquires the map information around a current location that has been detected by the signal from the GPS receiver 41A (step S12). Then, the second onboard device 4 estimates a current location with the recognized object and/or the curve start location of the lane line as a landmark (step S13). That is, in step S13, the second onboard device 4 estimates a current location based on the positional relationship between the location information of a feature included in the acquired map information and a location of the object recognized in step S10. In addition, a current location is estimated by comparing positional relationship between the information regarding the lane line included in the map information and the curve start location of the lane line recognized in step S11. Herein, the information regarding the lane line describe above is information indicative of the curve start location of the lane line.

Subsequently, the second onboard device 4 performs drive assistance based on the estimated current location (step S14) and then returns to step S10.

According to the example described above, the first onboard device 2 emits the laser to the road surface and receives the reflected wave, and recognizes the curve start location of the lane line formed on the road surface based on the change in the reflectivity of the laser in a predetermined direction. Consequently, the curve start location of the lane line can be recognized with high accuracy. Further, since this recognized curve start location of the lane line can be used as a landmark to estimate a current location, accuracy of estimation of a location of the vehicle 6 in the traveling direction can be improved.

According to the example described above, the first onboard device 2 scans the reflection areas A2-A6 along a predetermined direction with respect to the initially set reflection area A1. That is, the predetermined direction is a direction along the traveling direction of the measuring vehicle 5 positioned before the curve start location. Consequently, the curve start location can be recognized with high accuracy.

According to the example described above, the first onboard device 2 recognizes the curve start location based on the intensity distributions of the reflected waves within the reflection areas A1-A6 scanned along the traveling direction (predetermined direction). Consequently, the curve start location can be recognized with high accuracy.

According to the example described above, the first onboard device 2 recognizes a location where the number of peaks in the intensity distribution of the reflected wave changes from one to two, as the curve start location. Consequently, the curve start location can be recognized with high accuracy.

In the example described above, the information of the curve start location is given to the point that constitutes the information regarding the lane line already stored in the memory unit 31 of the server device 3; however, the present invention is not limited to this. The server device 3 may create new information regarding the lane line based on the road surface information received from the first onboard device 2.

Further, in the example described above, the first onboard device 2 is configured to be mounted on the measuring vehicle 6 dedicated for measuring, and the second onboard device 4 is configured to be mounted on the vehicle 6 which receives the drive assistance; however, the present invention is not limited to this. The onboard device 4 configured to be mounted on the vehicle 6 which receives the drive assistance can have functions of both of the first onboard device 2 and the second onboard device 4.

Further, in the example described above, the recognition of the curve start location is performed by the first onboard device 2; however, the present invention is not limited to this. The first onboard device 2 may transmit only the point cloud information to the server device 3, and the server device 3 may perform the recognition of the curve start location.

Further, in the example described above, the server device 3 gives the information of the curve start location to the information regarding the lane line; however, the present invention is not limited to this. For example, an operator of a map maker may manually give the information of the curve start location by looking at the road surface information transmitted from the first onboard device 2. Further, in the example described above, the map information including the information regarding the lane line is stored/held in the server device 3 (the memory unit 31); however, the first onboard device 2 and the second onboard device 4 can also store/hold at least a portion of this map information by appropriately communicating with this server device 3. Moreover, the above-described process of giving the information of the curve start location may be performed on the measuring vehicle side (i.e., by the first onboard device 2). That is, the above-described process of recognizing the curve start location of the lane line (step S3 of FIG. 7) and/or the process of generating the map information which includes the process of giving the information of the curve start location may be performed by the server device 3, or may be performed on the measuring vehicle side (i.e., by the first onboard device 2).

Further, in the example described above, the sensor unit 23 mounted on the first onboard device 2 includes the LiDAR 23B as one example. Additionally or alternatively, the sensor unit 23B mounted on the first onboard device may include a photographing unit 23C that photographs the road surface on which the measuring vehicle 5 is traveling, as shown in FIG. 10. In this case, the control unit 21 of the first onboard device 2 acquires an image of the road surface photographed by the photographing unit 23C from the photographing unit 23C, and recognizes the curve start location of the lane line formed on this road surface based on brightness information and such of this acquired image. For example, the photographing unit 23C is constituted of a stereo camera capable of detecting a distance to an object as a target object to be photographed.

Specifically, when performing the road surface information acquiring process that is exemplary shown in FIG. 7, the first onboard device 2 (the control unit 21) acquires an image of the road surface photographed by the photographing unit 23C from the photographing unit 23C, instead of or in addition to "acquire point cloud information" of step S1. Then, in a similar manner with step S3, the process proceeds to recognizing the curve start location of the lane line formed on the traveling road surface based on this acquired image (step S3), and returns to step S1. More specifically, the first onboard device (the control unit 21) converts the acquired photographed image to an orthoimage and recognizes the curve start location of the lane line (e.g., white line) using brightness information and such of this orthoimage, in step S3. In another example, a photographing unit 23C may be constituted of a monocular camera, so as to acquire an image of the road surface photographed by this monocular camera and make this image correspond to the point cloud information acquired from the LiDAR 23B. In this case, the curve start location of the lane line (e.g., white line) can be recognized on the point cloud information acquired from the LiDAR 23B (in other words, as the 3D information), using the brightness information and such of the photographed image.

In the photographed image, a portion of the road surface on which the lane line is formed has higher brightness, while a portion of the road surface on which the lane line is not formed has lower brightness. Further, as shown in FIG. 8, for the straight portion of the lane line, the brightness distribution within the reflection areas A1-A3 continues to have a peak at one point where the brightness is high. When it is switched from the straight portion to the curved portion of the lane line, then a percentage of the portion with the lower brightness increases as separating from the curve start location.

Consequently, the brightness distribution within the reflection areas A4-A6 will have peaks at two points, namely, at a point where the brightness is high and a point where the brightness is low. Further, as separating from the curve start location, the peak at the point where the brightness is low becomes greater while the peak at the point where the brightness is high becomes smaller. Accordingly, the first onboard device 2 recognizes a location at which the number of peaks in the brightness distribution of the reflection areas A1-A6 changes from one to two, as the curve start location. In other words, "brightness information" of the lane line of the photographed image in this modified example can be treated in the same manner as "reflection intensity" for the lane line of the above-described example. In this case, "reflection intensity" in FIG. 8 can be appropriately replaced with "brightness" of the photographed image. In addition, the location where the number of peaks changes from one to two is a location where a peak level at the point where the brightness is high and a peak level at the point where the brightness is low are in a predetermined magnitude relationship.

Further, the sensor unit 41 configured to be mounted on the second onboard device 4 includes the LiDAR 41B as one example; however, instead of this or in addition to this, the sensor unit 41 configured to be mounted on the second onboard device 4 may include a photographing unit 41C that photographs the road surface on which the vehicle 6 is traveling, as in the case with the first onboard device 2. That is, in accordance with the above-mentioned method, the second onboard device 4 may recognize the curve start location of the lane line from the photographed image, and may execute the drive assisting process shown in FIG. 9.

The present invention is not limited to the embodiments described above. That is, various modifications can be made and implemented without departing from the scope of the present invention.

### Reference Signs List

- 2: first onboard device (road surface information acquisition device)
- 5: vehicle (mobile object)
- 6: measuring vehicle (mobile object)
- 23B: LiDAR (transmitter, receiver)
- A1-A6: reflection areas

## Claims

1. A road surface information acquisition method comprising:
transmitting an electromagnetic wave to a road surface and receiving a reflected wave; and
recognizing a curve start location of a lane line formed on the road surface based on a change in a reflectivity of the electromagnetic wave in a predetermined direction.

2. The road surface information acquisition method according to claim 1, wherein the predetermined direction is a direction along a traveling direction of a mobile object located before the curve start location.

3. The road surface information acquisition method according to claim 1 or 2, wherein the curve start location is recognized based on intensity distributions of the reflected waves in reflection areas set along the predetermined direction.

4. The road surface information acquisition method according to claim 3, wherein a location where number of peaks in the intensity distribution of the reflected wave changes from one to two is recognized as the curve start location.

5. A road surface information acquisition device comprising:
a transmitter capable of transmitting an electromagnetic wave to a road surface;
a receiver capable of receiving the electromagnetic wave reflected by the road surface; and
a recognition unit configured to recognize a curve start location of a lane line formed on the road surface based on a change in a reflection intensity, in a predetermined direction, of the electromagnetic wave received by the receiver.

6. A road surface information acquisition device comprising:
an acquisition unit configured to acquire information from a sensor unit, the sensor unit including a transmitter capable of transmitting an electromagnetic wave to a road surface and a receiver capable of receiving the electromagnetic wave reflected by the road surface; and
a recognition unit configured to recognize a curve start location of a lane line formed on the road surface based on the information acquired by the acquisition unit.

7. A road surface information acquisition program that, when executed by a computer, causes the computer to:
transmit an electromagnetic wave to a road surface and receive a reflected wave; and
function as a recognition unit configured to recognize a curve start location of a lane line formed on the road surface based on a change in a reflectivity of the electromagnetic wave in a predetermined direction.

8. A storage medium storing the road surface information acquisition program according to claim 7.

9. A road surface information acquisition device comprising:
an acquisition unit configured to acquire an image of a road surface photographed by a photographing unit; and
a recognition unit configured to recognize a curve start location of a lane line formed on the road surface based on brightness information of the acquired image.
